# DEMANDE DE BREVET EUROPEEN

(11) **EP 1 086 878 A1**
(43) Date de publication de la demande: **28.03.2001**
(21) Numéro de dépôt: 00402591.2
(22) Date de dépôt: 19.09.2000
(51) Int. Cl.: B62D 1/184

(54) **Dispositif de blocage en position d'une colonne de direction réglable notamment de véhicule automobile**

(30) Priorité: 23.09.1999 FR 9911896
(71) Demandeur: Ecia Industrie, 92100 Boulogne-Billancourt (FR)
(72) Inventeur: Duchene, Jean-Marc, 25600 Sochaux (FR)
(74) Mandataire: Habasque, Etienne Joel Jean-François

(57) **Abrégé**

Ce dispositif comportant une structure de support de colonne (1), reliée à la structure du véhicule et comportant deux flasques (5,6) entre lesquels est disposée une pièce de montage (7) de la colonne et des moyens de blocage de cette colonne en position par rapprochement des flasques, comportant un tirant (9) associé à des moyens (10) de verrouillage de la pièce de montage par serrage des flasques et au moins un jeu de deux systèmes à pignon-crémaillère interposés entre la pièce de montage et l'un des flasques, dont les pignons (11,12) sont portés par le tirant (9) et dont les crémaillères (5b,6b) s'étendent parallèlement l'une à une lumière du flasque et l'autre à une lumière de la pièce de montage, chaque pignon (11,12) comportant des surfaces de friction adaptées pour coopérer l'une avec une surface du flasque ou de la pièce de montage, et l'autre, avec une surface de l'autre pignon, lorsque les moyens de verrouillage (10) sont en position de serrage, est caractérisé en ce que les surfaces de friction de chaque pignon sont ménagées de part et d'autre d'un voile (11b,12b) de celui-ci, s'étendant au-delà de la denture de celui-ci.

## Description

La présente invention concerne un dispositif de blocage en position d'une colonne de direction réglable notamment de véhicule automobile.

Plus particulièrement, l'invention se rapporte à un tel dispositif qui comporte une structure de support de colonne, reliée au reste de la structure du véhicule et comportant deux flasques entre lesquels est disposée une pièce de montage de la colonne et des moyens de blocage de cette colonne en position par rapprochement des flasques, comportant un tirant s'étendant entre les flasques dans des lumières de ceux-ci et au moins une lumière de la pièce de montage, les lumières des flasques et la lumière de la pièce de montage étant décalées angulairement les unes par rapport aux autres.

Dans de tels dispositifs, le tirant est associé à des moyens de verrouillage de la pièce de montage et donc du corps entre les flasques, par serrage des flasques, ces moyens de verrouillage étant manoeuvrables par exemple par un utilisateur, entre des positions active de verrouillage et escamotée de déverrouillage, permettant le réglage.

On connaît également dans l'état de la technique de tels dispositifs qui comportent en plus au moins un jeu de deux systèmes à pignon-crémaillère interposés entre la pièce de montage et l'un des flasques de la structure de support, dont les pignons sont portés par le tirant et dont les crémaillères s'étendent l'une parallèlement à la lumière du flasque correspondant et l'autre parallèlement à la lumière de la pièce de montage.

Chaque pignon comporte des surfaces de friction adaptées pour coopérer l'une avec une surface correspondante du flasque ou de la pièce de montage, et l'autre avec une surface correspondante de l'autre pignon, lorsque les moyens de verrouillage sont en position de verrouillage des flasques autour de la pièce de montage, pour immobiliser la pièce de montage et donc le corps en position.

Une telle structure est par exemple décrite dans le document GB-A-2 113 164.

Cependant, cette structure présente un certain nombre d'inconvénients, notamment au niveau du maintien en position du corps de colonne lorsque des efforts importants sont appliqués sur celui-ci.

Le but de l'invention est donc de résoudre ces problèmes.

A cet effet, l'invention a pour objet un dispositif de blocage en position d'une colonne de direction réglable notamment de véhicule automobile, du type comportant une structure de support de colonne, reliée au reste de la structure du véhicule et comportant deux flasques entre lesquels est disposée une pièce de montage de la colonne et des moyens de blocage de cette colonne en position par rapprochement des flasques, comportant un tirant s'étendant entre les flasques dans des lumières de ceux-ci et au moins une lumière de la pièce de montage, les lumières des flasques et la lumière de la pièce de montage étant décalées angulairement les unes par rapport aux autres, le tirant étant associé à des moyens de verrouillage de la pièce de montage et donc du corps entre les flasques par serrage des flasques et au moins un jeu de deux systèmes à pignon-crémaillère interposés entre la pièce de montage et l'un des flasques de la structure de support, dont les pignons sont portés par le tirant et dont les crémaillères s'étendent l'une parallèlement à la lumière du flasque correspondant et l'autre parallèlement à la lumière de la pièce de montage, chaque pignon comportant des surfaces de friction adaptées pour coopérer l'une avec une surface correspondante du flasque ou de la pièce de montage, et l'autre, avec une surface correspondante de l'autre pignon, lorsque les moyens de verrouillage sont en position de serrage des flasques autour de la pièce de montage, pour immobiliser la pièce de montage et donc le corps de colonne en position, caractérisé en ce que les surfaces de friction de chaque pignon sont ménagées de part et d'autre d'un voile du pignon correspondant, s'étendant au-delà de la denture de celui-ci.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un ensemble de colonne de direction;
- la Fig.2 représente une vue en coupe schématique illustrant la structure d'un dispositif de blocage selon l'invention;
- la Fig.3 représente une vue schématique de côté d'un flasque d'une structure de support entrant dans la constitution d'un dispositif selon l'invention; et
- la Fig.4 représente une vue schématique de côté d'une pièce de montage d'un corps de colonne entrant dans la constitution d'un dispositif selon l'invention.

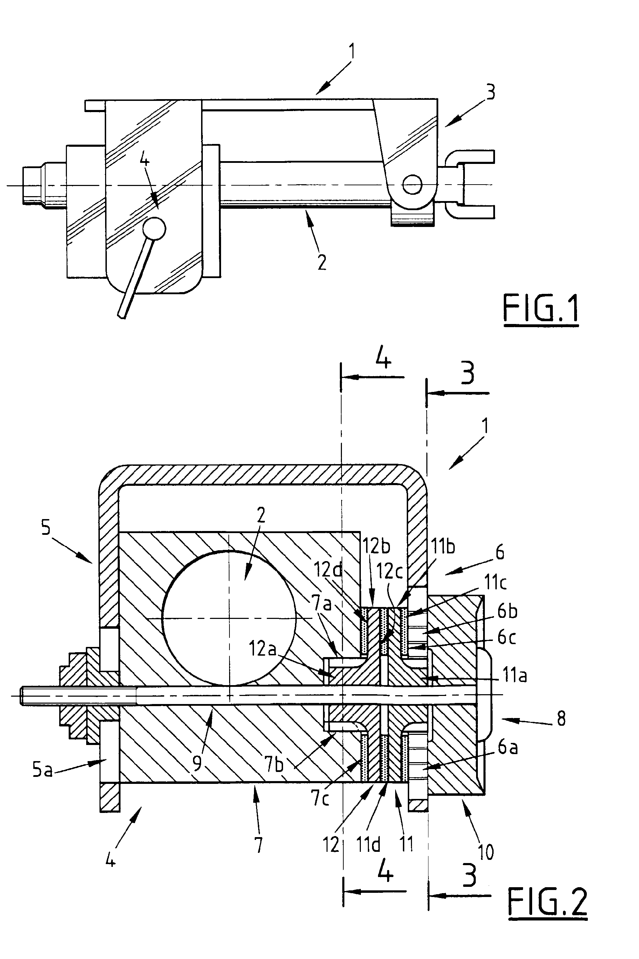

On a en effet représenté sur la figure 1, un système de colonne de direction qui comporte une structure de support désignée par la référence générale 1, adaptée pour être fixée sur le reste de la structure du véhicule.

Cette structure est munie de flasques permettant d'assurer l'accrochage d'un ensemble de colonne désigné par la référence générale 2.

A l'une des extrémités de cet ensemble, ces flasques sont associés à des moyens d'articulation 3 de l'ensemble de colonne sur la structure de fixation, tandis qu'à l'autre extrémité de l'ensemble de colonne, ces flasques sont associés à des moyens de réglage en position 4 de l'ensemble de colonne.

Un exemple de réalisation de ces moyens pourrait être trouvé dans le document GB-A-2 113 164 mentionné précédemment.

En fait, et comme on peut le voir plus clairement sur la figure 2, la structure de support 1 comporte à cette extrémité, deux flasques désignés par les références générales 5 et 6 entre lesquels est disposée une pièce de montage 7 de l'ensemble de colonne 2.

Des moyens de blocage de la colonne en position par rapprochement des flasques 5,6 sont également prévus.

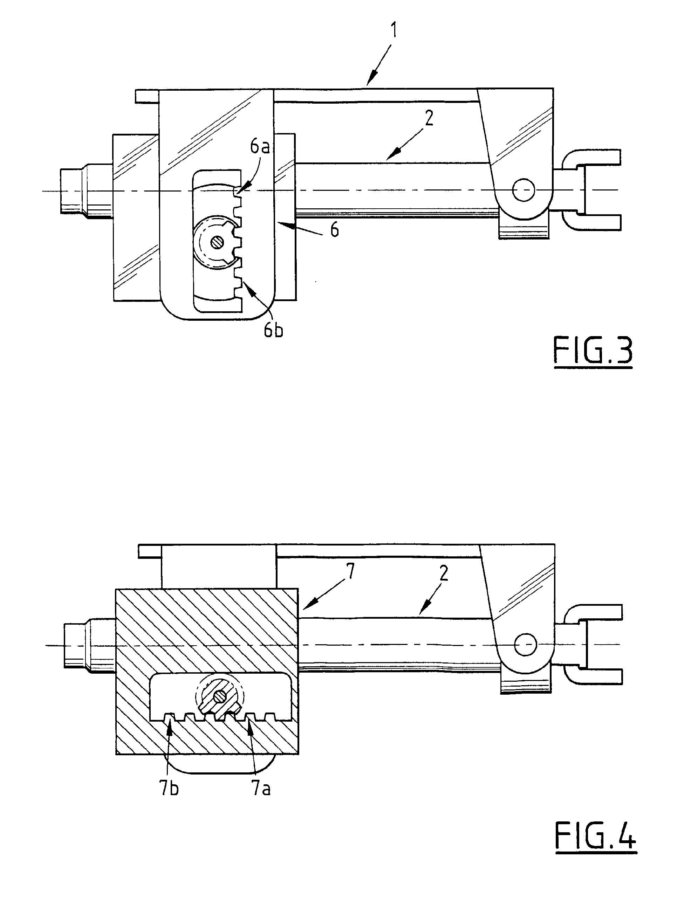

Ces moyens de blocage sont désignés par la référence générale 8 et comprennent par exemple un tirant désigné par la référence générale 9, s'étendant entre les flasques 5 et 6 de la structure de support dans des lumières de ceux-ci et au moins une lumière de la pièce de montage. Les lumières des flasques 5,6 et la lumière de la pièce de montage 7 sont décalées angulairement et s'étendent par exemple à 90° les unes par rapport aux autres, comme cela est illustré sur les figures 2,3 et 4.

Les lumières des flasques 5,6 sont désignées par les références générales 5a et 6a sur ces figures, tandis que la lumière de la pièce de montage 7 est désignée par la référence générale 7a.

Le tirant 9 est alors associé à des moyens de verrouillage désignés par la référence générale 10, de la pièce de montage 7 et donc du corps 2 entre les flasques, par serrage de ces flasques.

Ces moyens de verrouillage peuvent présenter n'importe quelle structure appropriée par exemple à came, à billes, etc...

Comme cela est décrit dans le document GB mentionné précédemment, un tel dispositif de blocage peut également comporter au moins un jeu de deux systèmes à pignon-crémaillère, interposés entre la pièce de montage 7 et l'un des flasques de la structure de support, tel que par exemple le flasque 6.

Les pignons de ces systèmes sont désignés par les références générales 11 et 12 sur la figure 2 et sont portés par le tirant 9, tandis que les crémaillères correspondantes s'étendent l'une parallèlement à la lumière du flasque correspondant et l'autre, parallèlement à la lumière de la pièce de montage.

Ces crémaillères peuvent être venues de matière ou rapportées sur la pièce correspondante.

Comme on peut le voir sur les figures 2,3 et 4, la crémaillère du flasque 6 est désignée par la référence générale 6b, tandis que la crémaillère de la pièce de montage 7 est désignée par la référence générale 7b.

Le pignon 11 est alors adapté pour coopérer avec la crémaillère 6b du flasque, tandis que le pignon 12 est adapté pour coopérer avec la crémaillère 7b de la pièce de montage.

De plus, chaque pignon comporte des surfaces de friction adaptées pour coopérer l'une, avec une surface de friction correspondante du flasque ou de la pièce de montage et l'autre, avec une surface de friction correspondante de l'autre pignon, lorsque les moyens de verrouillage sont en position de serrage des flasques autour de la pièce de montage, pour immobiliser la pièce de montage et donc le corps en position.

Pour résoudre les problèmes de fiabilité de l'immobilisation de la pièce de montage et donc du corps, lorsque des efforts importants sont appliqués sur celui-ci, dans le système selon l'invention, les surfaces de friction de chaque pignon sont ménagées de part et d'autre d'un voile du pignon correspondant, s'étendant au-delà de la denture de celui-ci.

C'est ainsi par exemple que chaque pignon 11 et 12 comporte une denture 11a, 12a et un voile 11b,12b s'étendant dans un plan perpendiculaire à l'axe du tirant 9, et de part et d'autre duquel sont ménagées des surfaces de friction 11c, 11d et 12c, 12d respectivement.

Les surfaces de friction de ces pignons sont donc ménagées de part et d'autre des voiles correspondants des pignons, et sont donc adaptées pour coopérer avec une surface de friction 6c du flasque 6, une surface de friction 7c de la pièce de montage 7 et avec la surface de friction de l'autre pignon, ce qui permet d'améliorer la fiabilité de l'immobilisation en position de la pièce de montage et donc du corps lorsque les flasques sont serrés autour de la pièce de montage.

Des rondelles de friction peuvent également être associées à ces surfaces pour améliorer encore la qualité de cette immobilisation.

Il va de soi bien entendu qu'un autre jeu de deux systèmes à pignon-crémaillère, symétrique à celui qui vient d'être décrit, peut être prévu de l'autre côté de la pièce de montage entre celle-ci et l'autre flasque 5 de la structure de support.

Bien entendu, différents modes de réalisation de ces systèmes peuvent être envisagés.

## Revendications

1. Dispositif de blocage en position d'une colonne de direction réglable notamment de véhicule automobile, du type comportant une structure de support de colonne (1), reliée au reste de la structure du véhicule et comportant deux flasques (5,6) entre lesquels est disposée une pièce de montage (7) de la colonne et des moyens de blocage de cette colonne en position par rapprochement des flasques, comportant un tirant (9) s'étendant entre les flasques dans des lumières (5a,6a) de ceux-ci et au moins une lumière (7a) de la pièce de montage, les lumières des flasques et la lumière de la pièce de montage étant décalées angulairement les unes par rapport aux autres, le tirant (9) étant associé à des moyens (10) de verrouillage de la pièce de montage et donc du corps entre les flasques par serrage des flasques et au moins un jeu de deux systèmes à pignon-crémaillère interposés entre la pièce de montage (7) et l'un des flasques (5,6) de la structure de support, dont les pignons (11,12) sont portés par le tirant (9) et dont les crémaillères s'étendent l'une (6b) parallèlement à la lumière du flasque correspondant et l'autre (7b) parallèlement à la lumière de la pièce de montage (7), chaque pignon (11,12) comportant des surfaces de friction (11c,11d,12c,12d) adaptées pour coopérer l'une avec une surface correspondante (6c,7c) du flasque ou de la pièce de montage, et l'autre, avec une surface correspondante (11d,12c) de l'autre pignon, lorsque les moyens de verrouillage (10) sont en position de serrage des flasques autour de la pièce de montage, pour immobiliser la pièce de montage et donc le corps de colonne en position, caractérisé en ce que les surfaces de friction (11c,11d,12c,12d) de chaque pignon sont ménagées de part et d'autre d'un voile (11b,12b) du pignon correspondant, s'étendant au-delà de la denture (11a,12a) de celui-ci.

2. Dispositif selon la revendication 1, caractérisé en ce que des rondelles de friction sont interposées entre les surfaces de friction des pignons et entre celles-ci et les surfaces complémentaires de la pièce de montage (7) et du flasque (6).

3. Dispositif selon la revendication 1 ou 2, caractérisé en ce que deux jeux de deux systèmes à pignon-crémaillère sont disposés symétriquement de chaque côté de la pièce de montage (7) entre celle-ci et le flasque correspondant (5,6) de la structure de support.
